(19) Europäisches Patentamt / European Patent Office / Office européen des brevets

(11) **EP 2 762 847 A1**

(12) **EUROPEAN PATENT APPLICATION**

(43) Date of publication:
06.08.2014 Bulletin 2014/32

(51) Int Cl.:
*G01L 1/24* (2006.01)   *G01B 11/16* (2006.01)

(21) Application number: 13153537.9

(22) Date of filing: 31.01.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Nederlandse Organisatie voor Toegepast -Natuurwetenschappelijk Onderzoek TNO 2628 VK Delft (NL)**

(72) Inventors:
• **Hagen, Ronald Antonius Jan**
  **2628 VK Delft (NL)**
• **Nieuwland, Remco Alexander**
  **2628 VK Delft (NL)**
• **Toet, Peter Martijn**
  **2628 VK Delft (NL)**

(74) Representative: **Jansen, Cornelis Marinus et al V.O. Johan de Wittlaan 7 2517 JR Den Haag (NL)**

(54) **Fiber optic sensor system and method**

(57)   A fiber Bragg grating (FBG) is used to measure strain. An optical fiber is used with a grating that comprises periodic spatial variations with mutually different first and second spatial frequencies. The wavelength of a first and second light source is swept over a first and second wavelength range that contain first and second Bragg reflection wavelengths corresponding to first and second spatial frequencies respectively. Light from the light sources is supplied to the optical fiber and to a reference branch. The reference branch contains an interferometer and a first and second filter having a transmission or reflection peak in the first and second wavelength range respectively. Time points of first and second peaks in the reflection of the light from the first and second light source by the optical fiber or detected during said sweeping. A count is made of periods of output of the interferometer, between the time points of detection of the first and second peaks and time points of detection of peaks from the first and second filter. The strain is solved from an equation that relates the variations of the temperature and the strain as shown by the counts.

Fig.2

EP 2 762 847 A1

**Description**

Field of the invention

The invention relates to a fiber optic sensor system and to a fiber optic sensing method.

Background

Use of fiber Bragg gratings (FBGs) to derive strain and temperature variations from Bragg wavelength shift is known from an article by Xu et al, titled "Discrimination between strain and temperature effects using dual-wavelength fiber grating sensors", published in Electronic Letters 1994 (vol 30) pages 1085-1087.

Conventionally an FBG comprises an optical fiber with a region wherein the optical properties of fiber material vary in a spatially periodic way, so that the fiber will selectively reflect light with a wavelength that matches twice the spatial period. Strain, thermal expansion or/and thermo-optic effect of the fiber results in a shift of this wavelength and can therefore be used as a measurement of temperature or strain. In turn, a sensor comprising an FBG may be configured to make the measured strain representative of other parameters, such as fluid pressure, structural deformation, concentration of a chemical substance etc, for example by attaching the FBG to a membrane that will be deformed by pressure changes, attaching the FBG to a deformable structure, or providing material on the FBG that swells or contracts in proportion to concentration changes etc.

Xu et al disclose the use of an optical fiber with superimposed FBGs. Xu et al determine the Bragg wavelength shifts of the superimposed FBGs to derive a combined estimate of strain and temperature variations. Xu et al describes use of LEDs at two different wavelengths and an optical spectrum analyser was used to detect the wavelength shifts in the light reflected from the two fiber gratings. Xu shows a figure wherein the LEDs at two wavelengths apply light at opposite ends of the fiber respectively, so that reflections from the FBGs will be returned to the opposite ends. Xu mentions the problem of errors that could be attributed to the limited resolution of the spectrum analysers.

Summary

Among others, it is an object to provide for fiber optic sensor system that provides for high accuracy estimate of strain and temperature variations with high temporal resolution.

A method of measuring at least strain, or a parameter that affects the strain, according to claim 1 is provided. Herein use is made of a multi-wavelength fiber Bragg grating, that is, an optical fiber with a fiber part where variations of an optical property of the fiber comprise periodic spatial variations with mutually different first and second spatial frequencies. A first and second light source are used, that are swept over a first and second wavelength range that contain first and second Bragg reflection wavelengths corresponding to first and second spatial frequencies respectively. Time points of peaks in Bragg reflection during the sweeps. This may be done by detecting peaks in the intensity of light reflected by the optical fiber, or throughs in intensity of light transmitted by the fiber that are the result of the peaks in Bragg reflection. An interferometer is used to count interferometer periods between the time points of Bragg reflection and time points at which the sweeps pass reference wavelengths defined by first and second filters. The counts of interferometer periods are used to determine wavelength differences relative to the reference wavelengths. The wavelength differences may be determined in an absolute sense, or as temporal variations of the absolute wavelength differences. From the wavelength differences, strain and temperature variations are jointly determined. This may be done by computing the solution of an equation that expresses wavelength shifts at the first and second wavelength as a function of strain and temperature variation, or by using an expression for the solution. As used here, the term "variation" is used to indicate that it is not required to determine an absolute size: it may suffice to determine differences between the strain and temperature values and arbitrary reference levels, or differences between strain and temperature values at different time points, possibly leaving a need to apply a calibration factor if actual strain or temperature values need be determined.

In a further embodiment, "fractional" counts may be used wherein detected phase positions within the interferometer periods at the time points of Bragg reflection are used in addition to the count of periods. Thus, the first and second Bragg reflection wavelengths can be determined more accurately.

In an embodiment, the optical fiber may contain more than one fiber part with variations of the optical property at mutually different spatial frequencies. These spatial frequencies may be different from the first and second spatial frequencies. This makes it possible to determine variations for a plurality of fiber parts in one sweep, using counts for the corresponding peaks in Bragg reflection.

By using sweeps from a first and second light source and first and second references it is made possible to determine the strain and temperature values at high temporal and spatial resolution, while using a single transducer to measure both properties simultaneously. The method has the additional advantage that the dimensions of the optical transducer can be kept small. The method may be used to measure both strain and temperature simultaneously at the same location using a single transducer. The method may be used to measure a parameter that affects the strain and is able to compensate for any temperature fluctuations.

A fiber optic sensor system according to claim 8 is provided. In an embodiment the first and second light source are sweepable lasers; first and second light source each may be one of a distributed feedback laser or a Vertical Cavity Surface Emitting Laser for example. In another embodiment at least one of the first and second light source comprises broadband light source such as a LED, a piezo stage and a Fabry-Perot filter on said piezo stage, configured to pass light from the broadband light source as output of the first or second light source.

In an embodiment the light sources are swept during different time intervals. This makes it possible to use one detection system for both. In a further embodiment, combined solutions of variations of the temperature and the strain, or the parameter that affects the strain, are determined at a relatively lower temporal frequency of said variations. Solutions of variations of the strain are determined at a relatively higher temporal frequency of said variations, using a constraint that the variations of the temperature at that higher temporal frequency are zero or correlated to the variations of the strain, or the parameter that affects the strain. In this way a higher temporal resolution of strain determination is made possible.

In another embodiment the sweeps of the wavelength of the first and second light source are performed simultaneously. This increased the higher temporal resolution of strain determination.

Brief description of the drawing

These and other objects and advantageous aspects will become apparent from a description of exemplary embodiments, by reference to the drawing, in which

Figure 1 shows a prior art Fiber Bragg grating measuring system
Figure 2 shows a schematic representation of the Fiber optic sensor system utilizing superimposed fiber Bragg based sensors Figure 3 illustrates the index of refraction in an sFBG
Figure 4 shows a graph of wavelength variations as a function of time for both sources
Figure 5 shows a Fiber optic sensor system

Detailed description of exemplary embodiments.

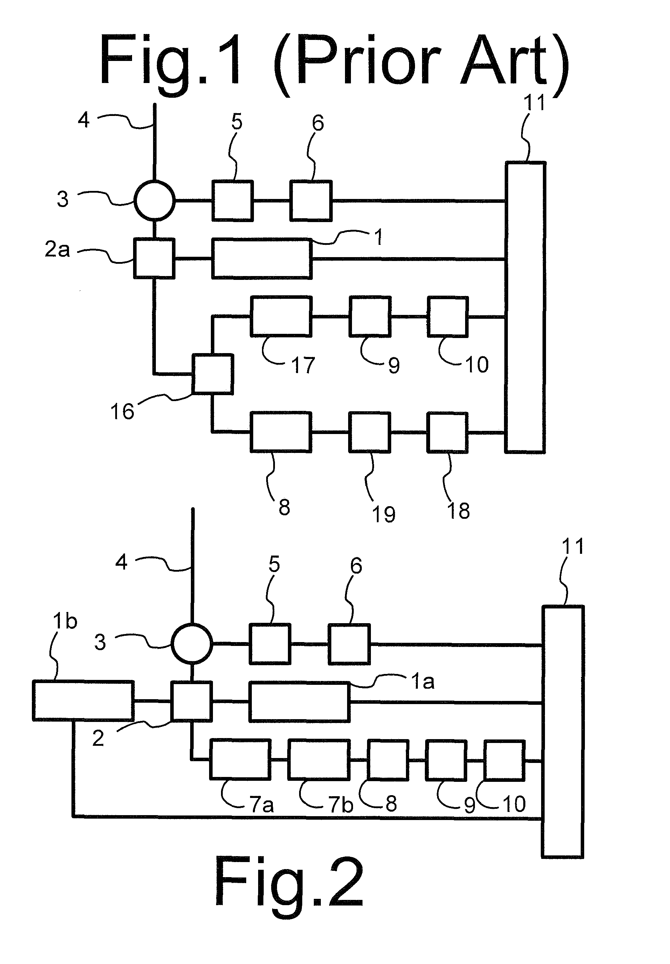

Figure 1 depicts a prior art fiber optic measurement system, which is known per se from WO2012/087136. The fiber optic measurement system comprises a tunable light source 1, a splitter 2a, a measurement branch, a reference branch and a data processing system 11. Splitter 2a splits light from tunable light source 1 into a first part fed to the measurement branch and a second part fed to the reference branch. Data processing system 11 has outputs coupled to a control input of tunable light source 1.

The measurement branch comprises a circulator 3, an optical fiber sensor 4, a first photodiode 5 and a first analog to digital converter 6. The optical fiber sensor comprises an optical fiber with a Fiber Bragg Grating (FBG). The first output of splitter 2a is optically coupled to an input of circulator 3. Circulator 3 has an input/output optically coupled to optical fiber sensor 4, and an output optically coupled to first photodiode 5. In an embodiment a plurality of optical fiber sensors 4 may be coupled to circulator 3, for example a plurality of FBGs in an optical fiber. First photodiode 5 has an output that is electrically coupled to an input of first analog to digital converter 6. First analog to digital converter 6 has an output coupled to data processing system 11.

The reference branch comprises a further splitter 16, a wavelength reference 17, an interferometer 8, a second photodiode 9, a third photodiode 19 and second and third analogue to digital converters 10 and 18. Splitter 2a is optically coupled to further splitter 16, which supplies split light to wavelength reference 17 and interferometer 8. In an exemplary embodiment wavelength reference 17 comprises an optical fiber with a Bragg grating, with a Bragg wavelength in the sweep range of light source 1. However, other filters with a transmission or reflection peak or through at one or more discrete wavelengths can be used. Interferometer 8 may comprise an optical splitter and an optical combiner and fibers of mutually different optical length between the optical splitter and an optical combiner, so that the light from the output is of interferometer is a sum of light fractions that have travelled along paths of different length. An output of wavelength reference 17 is optically coupled to second photodiode 9. An output of second photodiode 9 is electrically coupled to second analogue to digital converter 10. Second analog to digital converter 10 has an output coupled to data processing system 11. The output of interferometer 8 is optically coupled to third photodiodes 19. An output of third photodiode 19 is electrically coupled to third analogue to digital converter 18. Third analog to digital converter 18 has an output coupled to data processing system 11.

In operation, data processing system 11 causes tunable light source 1 to perform periodic sweeps of the wavelength of tunable light source 1. Splitter 2a passes part of the light from light source 1 through circulator 3 to optical fiber sensor 4, or to multiple optical fiber sensors. Circulator 3 redirects reflections of the sensor to photodiode 5, which generates an electrical signal dependent on the reflected light intensity. First analog to digital converter 6 digitizes the electrical signal for storage/analysis. Data processing system 11 collects the digitized data.

A second part of the light from the second output of optical coupler is used to measure the wavelength as function of time. Interferometer 8 produces an output beam that is the result of interference between parts of an incoming beam from further splitter that has passed through light paths of mutually different lengths, resulting in an intensity that varies periodically as a function of wavelength. Wavelength reference 17 is a filter that passes or blocks light substantially only at one discrete predetermined wavelength or several discrete predetermined wavelengths.

Data processing system 11 determines the wavelength at the time of detection of Bragg reflection by first photodiode 5 using a known wavelength where wavelength reference 17 produces a peak or through in the output of third photodiode 19 and the output of interferometer 8. Data processing system 11 may count the number of periods in the output from interferometer 8 as a function of time during the wavelength sweep between the time of detection of Bragg reflection in the output of first photo diode 5 and the time of detection of produces of the peak or through in the output of third photodiode 19. Furthermore, data processing system 11 may detect the phase in the period as a function of time during the wavelength sweep. The count and the optional fraction are indicative of the wavelength shift of the Bragg wavelength of optical fiber sensor 4.

Figure 2 schematically depicts a novel fiber optic measurement system in combination with a superimposed FBG (s-FBG). The fiber optic measurement system comprises a first and second tunable light source 1a,b, a wide band optical coupler 2, a measurement branch, a reference branch and a data processing system 11. The measurement branch comprises a wide band optical circulator 3, optical fiber sensor 4, a first photodiode 5 and a first analog to digital converter 6. Optionally a plurality of optical fiber sensors 4 may be used. The reference branch comprises first and second wavelength references 7a,b, an interferometer 8, at least one further photodiode 9 and a second analogue to digital converter 10. Data processing system 11 has outputs coupled to control inputs of tunable light sources 1a,b.

Tunable light sources 1a,b may be distributed feedback lasers (DFB), a Vertical Cavity Surface Emitting Laser (VCSEL) or a broadband source combined with a Fabry-Perot filter on a piezo stage, for example. In an embodiment, first and second light sources have sweep ranges in the O-and C-band respectively (1230-1360nm and 1530-1565 nm). Optical coupler 2 may be a fused fiber coupler which is well known in the art.

Light sources 1a,b are optically coupled to optical coupler 2. Optical coupler 2 has a first and second output. The first output of optical coupler 2 is optically coupled to an input of circulator 3. Circulator 3 has an input/output optically coupled to optical fiber sensors 4, and an output optically coupled to first photodiode 5, Photodiode 5 has an output that is electrically coupled to an input of first analog to digital converter 6. First analog to digital converter 6 has an output coupled to data processing system 11.

Optical fiber sensor 4 comprises an optical fiber with a region wherein an optical property of the fiber, such as the refractive index, varies as a function of position along the main direction of light propagation through the fiber. Such a variable property may be created for example by oxidizing Ge-doping in the optical fiber by exposure to UV irradiation with variable intensity as a function of position.

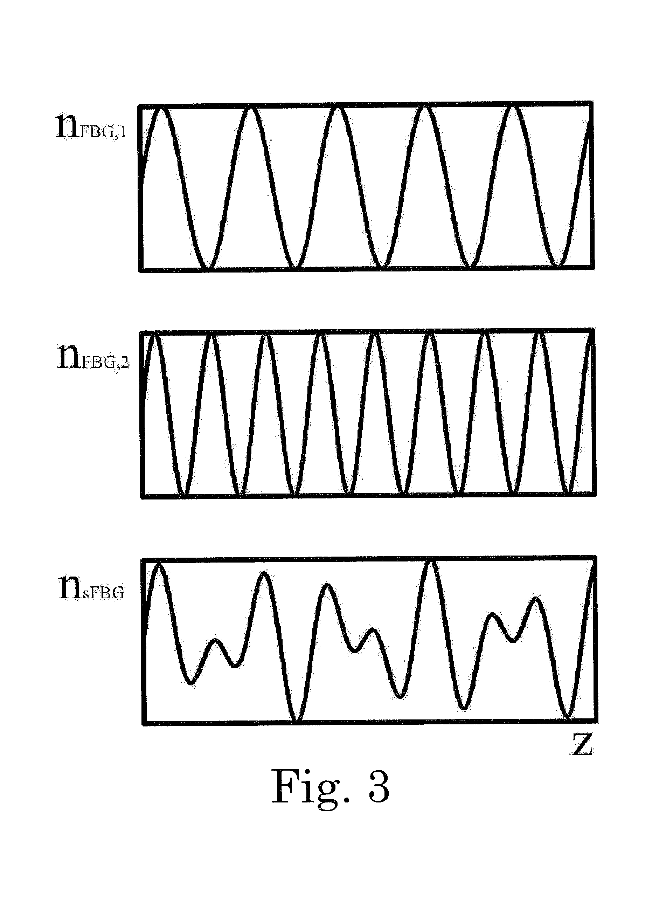

Figure 3 illustrates optical fiber sensor 4 by means of graphs of the index of refraction "n" as a function of position along the main direction of propagation, as an example of the optical property. The function is a sum of two periodic variation components with different spatial frequencies. Periodic variation components $n_{FBG,1}$ and $n_{FBG,2}$ of the index of refraction with a single spatial frequency are shown as a function of position in a first and second graph. The sum $n_{sFBG}$ is shown in a third graph (not at the same vertical scale). The spatial variation optical property according to the third graph may be realized for example by a first exposure to UV irradiation with spatially periodic intensity with the first period shown in the first graph, followed by a second exposure to UV irradiation with spatially periodic intensity with the second period shown in the second graph. The illustrated variation pattern and periods are for the purpose of illustration only: they do not represent a physical embodiment. In general, the periods of the components are selected to cause Bragg reflection peaks at wavelengths in the ranges of wavelengths emitted by light sources 1a,b respectively, or vice versa that light sources 1a,b are selected to have sweep ranges that contain the Bragg reflection wavelengths respectively. In an embodiment, the periods match optical wavelengths in the optical O-band and the C band respectively, that is, they lie in a range of 1230-1360nm and in a range of 1530-1565 nm respectively.

Although a preferred embodiment has been shown wherein the variations with different period are superimposed, it should be appreciated that if there are no large temperature or strain gradients, adjacent regions may be use in the fiber, in each of which the optical property varies periodically as a function of position, but with different spatial periods.

The second output of optical coupler 2 is optically coupled to first wavelength reference 7a, which in turn is optically coupled to second wavelength reference 7b. wavelength references 7a,b are configured as reference for respective different wavelength bands. First wavelength reference 7a may comprise an optical fiber with a fiber Bragg grating that has a substantially discrete transmission through at a predetermined wavelength within a sweep range of first light source 1a. But other types of reference, optionally with multiple discrete peaks or throughs may be used. Second wavelength reference 7b may have a similar structure as first wavelength reference, except that it's substantially discrete through or peak (or peaks or throughs) lies at a predetermined wavelength within a sweep range of second light source 1b. In an embodiment, the throughs or peaks lie in the optical O-band and the C-band respectively.

Second wavelength reference 7b is optically coupled to interferometer 8. An output of interferometer 8 is optically coupled to further photodiode 9 or further photodiodes 9. An output of further photodiode 9 or photodiodes 9 is electrically coupled to second analogue to digital converter 10. Second analog to digital converter 10 has an output coupled to data processing system 11.

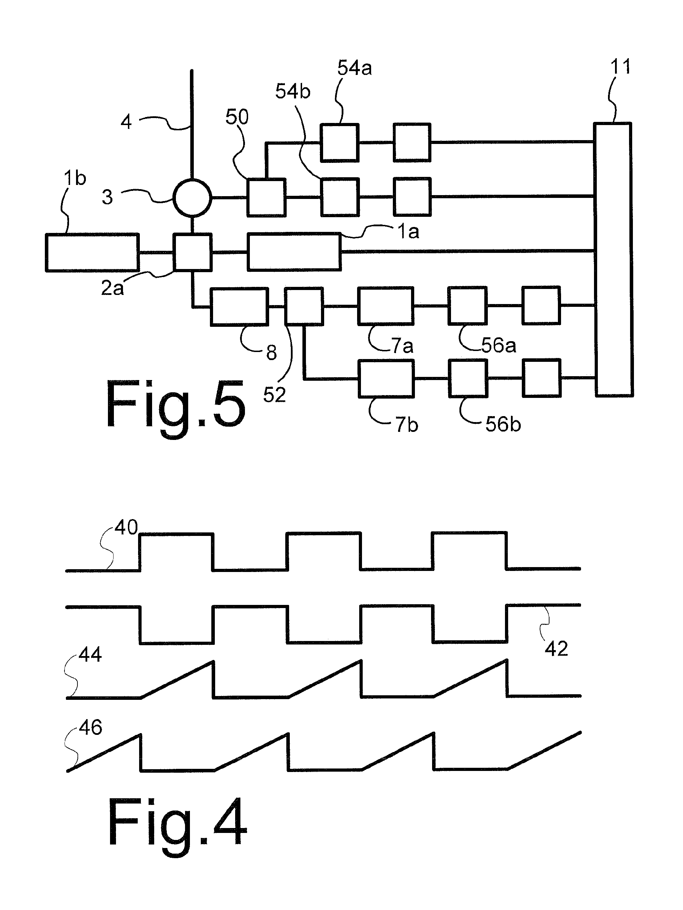

In operation, data processing system 11 causes first and second tunable light sources 1a,b to emit light selectively during first and time intervals respectively. The first and second time intervals may alternate with one another, for example. Data processing system 11 causes the wavelength of first tunable light source 1a to be swept over a first sweep range during each first time interval. Data processing system 11 causes the wavelength of second tunable light source 1b to be swept over a second sweep range during each second time interval. The sweeping scheme is given in Figure 4, showing the alternate behavior in time of both sources. Figure 4 illustrates the sweeping scheme, showing graphs of intensity 40, 42 and graphs of wavelength 44, 46 of light sources 1a, b. As shown, first and second light source 1a,b are alternately on and off. But alternatively each light source may be kept on at a constant wavelength while the other is swept. Although figure 4 shows an example in which both light sources are swept alternately one after the other, it should be appreciated that different timing schemes may be used, for example a timing scheme in which one of light sources 1a,b is swept in wavelength only once every n-th sweep of the other light source 1a,b.

Optical coupler 2 passes light from the light sources through circulator 3 to optical fiber sensors 4. Circulator 3 redirects reflections of the sensors to photodiode 5, which generates an electrical signal dependent on the reflected light intensity. First analog to digital converter 6 digitizes and optionally stores the electrical signal for storage/analysis. Data processing system 11 collects the digitized data.

Light from the second output of optical coupler is used to determine the wavelength of the two light sources at the time points where first photodiode 5 detects Bragg reflection. For example, for a sweep of first light source 1a, data processing system 11 may determine a first time point of detection of Bragg reflection by first photodiode 5. Data processing system 11 may determine the number of periods as a function of time of interferometer 8 between the first time point and a second time points at which a through or peak occurs in the signal from further photodiode 9 or further photodiodes 9 corresponding to a known wavelength due to first wavelength reference 7a. Data processing system 11 may furthermore add a measured fraction of the period of the interferometer that additionally lies between these time points Data processing system 11 may perform a separate, but similar determination of the wavelength at the time detection of Bragg reflection during the sweep of second light source 1b, using a known wavelength of second wavelength reference 7b.

It may be noted that a single sweep of a single light source over a wide wavelength range could be used instead, to determine the wavelength at the time points of the Bragg reflections. However, by using different sweeps less time is needed between the time points at which Bragg reflection occurs, which results in a better temporal resolution. Furthermore, much simpler light source can be used.

In addition to controlling the timing of tunable light sources 1a, b and performing data collection, data processing system 11 performs data processing to determine strain and temperature from measured wavelength shift of Bragg reflection wavelengths from Optical fiber sensor 4. The sweep rate of light sources 1a,b determines temporal resolution of the strain measurements. The data processing involves the determination of the resonance wavelength shifts for the s-FBGs and the conversion to temperature and the strain changes. The conversion follows the expression

$$X = A\,S$$

Herein S is a vector of which the components (S1, S2) are the resonance wavelength shifts S1, S2 in the wavelength bands of the different light sources 1a,b and X is a vector (DT, DM) of which the components are the change in temperature DT and the change in strain DM. "A" is a 2x2 matrix, that is

$$DT = A11*S1 + A12*S2 \text{ and } DM = A21*S1 + A22*S2$$

wherein A11, A12, A21, A22 are the components of the matrix A. The matrix A is the inverse of a 2x2 matrix B containing sensitivity values (B11, B12, B21, B22) that relates DT and DM to the shifts: S1 = B11*DM+B12*DT and S2=B21*DM+B22*DT. The matrix B may be determined by calibration of the sensor, that is, ratios between wavelength shift on one hand and one of change in strain and change in temperature shift when the other of the strain and temperature is kept constant. These sensitivity values may be determined in a calibration step, wherein controlled temperature and strain variations are applied one by one and wavelength shifts are measured.

Although an embodiment has been described wherein the shifts S1 and S2 of the different Bragg reflection wavelengths are measured alternately, by alternate sweeps of first and second light source 1a,b, it should be appreciated that other time sequences are possible. For example, the shift S1 of one Bragg reflection wavelength could be measured a number of times successively before next measurement of the shift S2 of the other Bragg reflection wavelength is measured, by using a plurality of repeated sweeps of first light source 1a before a next sweep of second light source 1b.

Under most circumstances wherein measurement of rapid variations are relevant, strain will vary more rapidly than temperature, or at least high frequency strain variations will be strongly correlated with high frequency temperature variations. If strain varies more rapidly, a higher frequency part of the output signals is due only to strain variations. In this case, the higher frequency components of strain variation can be determined from shifts of Bragg reflections in a single wavelength range, using the plurality of repeated sweeps of first light source 1a. The lower frequency components of strain variation can be determined in combination with temperature variation from shifts of Bragg reflections in the combination of wavelength ranges, using sweeps of first and second light source 1a,b.

In an embodiment, data processing system 11 is configured to do so by computing combined DT, DM values from shifts S2 at the sweep of second light source 1b and the shift S1 of an adjacent sweep of first light source 1a (or an interpolation between such adjacent sweeps). Data processing system 11 then up-samples (interpolates) these DT, DM values to values for time points of the repeated sweeps of first light source 1a. The up-sampled DT, DM can be considered to be a low frequency band component of the DT, DM variations, to which a high frequency band component of strain variations DM derived from the shifts S1 can be added.

This may be done for example by assuming that the up-sampled temperatures DTu equal the actual temperatures and using this assumption to eliminate the need for measurements of the shift S2:

$$DM = DMu + (S1 - B11*DMu - B12*DTu) / B11$$

It should be appreciated that data processing system 11 need not use this specific formula: various other computation algorithms may be used that yield the same or similar results. In another embodiment, wherein it is assumed that high frequency DT, DM variations are correlated (DT-DTu=c*(DM - DMu)), the need for measurements of the shift S2 can be similarly eliminated:

$$DM = DMu + (S1 - B11*DMu - B12*DTu) / (B11 + c\ B12)$$

Similar computations may be used when other successions of sweeps of the light sources 1a,b are used. Such a computation may be used also when alternating sweeps of the first and second light source may be used. The shifts S1, S2 obtained for respective time points may be treated as samples of temporal signals S1 and S2. These signals may be low pass filtered using a filter with a predetermined bandwidth, which includes all frequencies of (uncorrelated) temperature variation. To optimize temporal resolution the bandwidth of the low pass filter is preferably set to the lowest frequency at which the low pass bandwidth includes substantially all frequencies of (uncorrelated) temperature variation.

The resulting low pass filtered signals may be used to determine interpolated low pass filtered values signal shift values for any time points. From the low pass filtered values signal shift values at the time points of the sweeps, low frequency band values DMl (t), DTl (t) of the strain and temperature at the time points of the sweeps may be determined. Then the actual measured values of the shifts can be used to estimate the value of the strain including the high frequency band, using one formula for time points t1 for which an actual measured first shift S1 is available:

$$DM = DMl\,(t1) + (S1 - B11*DMl\,(t1) - B12*DTl\,(t1)) / (B11 + c\ B12)$$

and another formula for time points t2 for which an actual measured first shift S1 is available

$$DM = DMl\,(t2) + (S2 - B21*DMl\,(t2) - B22*DTl\,(t2)) / (B21 + c\ B22)$$

By setting c=0 formulas are obtained for systems wherein the temperature only has low frequency variations. Figure 5 illustrates an embodiment wherein simultaneous sweeps of the first and second light sweeps can be used. In this embodiment, wavelength selective splitters 50, 52 are provided at the output of circulator 3 and interferometer 8 respectively. Splitters 50, 52 are configured to split light from the sweep range of first light source 1a from that of second light source 1b, or at least produce wherein the intensity ratio between light from the light sources is reduced, e.g. by a factor of ten or more. In an embodiment splitters 50, 52 may be implemented by means of a selectively transmissive mirror that reflects and transmits light from the first and second light source 1a,b or vice versa. In another embodiment splitters 50, 52 may be implemented by means of a wavelength independent splitter followed by optical band pass filters for light with wavelengths for light from the first and second light source 1a,b.

First and second photodiodes 54a,b are used coupled to outputs for different wavelength ranges of the splitter 50 after circulator 3. Third and fourth photo diodes 56a,b are used coupled to the outputs of the splitter 50 after interferometer 8. Wavelength references 7a,b may be located between wavelength selective splitter 52 and third and fourth photo diodes 56a,b. In this embodiment data processing system 11 is configured to make first and second light source 1a,b sweep simultaneously.

Data processing system 11 uses the output signal from first and third photodiode 54a, 56a to determine the wavelength shift of a first one of the Bragg reflections and second and fourth photodiode 54b, 56b to determine the wavelength shift of a second one of the Bragg reflections. In this way, shifts S1 S2 of more closely spaced time points may be determined.

Although an embodiments may be used wherein optical fiber sensor 4 comprises an optical fiber with only a single superimposed FBG, for example adjacent a distal end of the fiber, it should be appreciated that alternatively the optical fiber may comprise a plurality of superimposed FBGs, e.g. a first and second superimposed FBG. In a further embodiment, each of these superimposed FBGs has first and second periods of spatial variation of its optical property that correspond to Bragg reflection in the sweep range of the first and second light source respectively. Preferably, the first and second periods of all superimposed FBGs are different form those of the other superimposed FBGs. This makes it possible to compute strain values for each of these superimposed FBGs from a single combination of sweeps, for example to determine strain as a function of position along the optical fiber.

Although embodiments with a circulator have been shown, wherein light from both light sources is supplied at a first end of the optical fiber with the sFBG and intensity light reflected to that same first is detected, it should be appreciated that alternatively, reflection peaks of the sFBG may be measured indirectly by detecting intensity of transmitted light at a second end of the optical fiber. In this case the circulator may be omitted. However, the use of the same proximate end of the optical fiber both for supplying light from both sweeps and detection has advantages in applications where the sFBG has to be entered into spaces that are difficult to access, for example in medical applications wherein the optical fiber is entered into a patient's body. In a further embodiment, a combination of a splitter and wavelength selective filters may be used as a circulator.

Although figure 2 shows an embodiment wherein first wavelength references 7a, b and interferometer 8 are coupled in series, it should be appreciated that alternatively, part or all may be coupled in parallel to different photodiodes, or that the one or more of the first wavelength references 7a, b may be included in an arm of interferometer 8. Although figure 2 shows an embodiment wherein transmission through first wavelength references 7a, b is used, it should be appreciated that alternatively reflection from a wavelength reference may be used.

**Claims**

1.    A method of measuring strain, or a parameter that affects the strain, by means of an optical fiber with a fiber part wherein spatial variations of an optical property of the fiber comprise periodic spatial variations with mutually different first and second spatial frequencies, the method comprising

        - sweeping the wavelength of a first and second light source over a first and second wavelength range that contain first and second Bragg reflection wavelengths corresponding to first and second spatial frequencies respectively;
        - supplying light from the first and second light source to the optical fiber and to a reference branch, the reference branch comprising at least one interferometer and a first and second filter having at least one discrete transmission or reflection peak or through in the first and second wavelength range respectively;
        - detecting time points of first and second peaks in the reflection of the light from the first and second light source by the optical fiber during said sweeping respectively;
        - detecting counts of periods in an output signal of the interferometer or interferometers, between the time points of detection of the first and second peaks and time points of detection of further peaks or throughs in the intensity of the light from the first and second light source transmitted through or reflected from the first and second filter respectively;

- using said counts to determine wavelengths differences of the first and second peak with respect to the wavelengths of the reflection peaks or throughs of the first and second filter;

- determining variation of the strain, or the parameter that affects the strain, from the wavelength differences determined for the first and second peak as a solution of an equation with coefficients relating the variations of the temperature and the strain of the fiber part to variation of the Bragg reflection wavelengths of the optical fiber.

2. A method according to claim 1, comprising

- sweeping the wavelength of the first and second light source during different time intervals,
- detecting the time points of first and second peaks and the further peaks or throughs in response to the light from the first and second light source in the first and second time intervals respectively;
- determining the wavelength differences by means of counted periods of the interferometer in the first and second time intervals respectively.

3. A method according to claim 1, wherein the optical fiber comprises a further fiber part wherein spatial variations of the optical property of the fiber comprise further periodic spatial variations with mutually different third and fourth spatial frequencies, the first and second wavelength range comprising wavelengths corresponding to third and fourth spatial frequencies respectively, the method comprising

- detecting further time points of third and fourth peaks in the reflection the light from the first and second light source by the optical fiber respectively;
- detecting further counts of periods or segments of periods of output of the interferometer or interferometers, between the time points of detection of the third and fourth peaks and the time points of further peaks or throughs in the intensity of the light from the first and second light source transmitted through or reflected from the first and second filter respectively;
- determining wavelength differences between the wavelengths of the third and fourth peak with respect to the wavelengths of the reflection peaks or throughs of the first and second filter using said further counts.

4. A method according to any one of claims 1-3, comprising determining phase positions within the interferometer periods at the time points of detection of the first and second peaks and determining the wavelength differences using said counts and said phase positions.

5. A method according to any one of claims 1-4, comprising determining combined solutions of temporal variations of the strain, or the parameter that affects the strain, and temporal variations of the temperature from the wavelength differences, the variations of the temperature being determined at a relatively lower temporal resolution, the variations of the strain, or the parameter that affects the strain, being determined at a relatively higher temporal resolution, with a constraint that the variations of the temperature at that higher temporal frequency than associated with said relatively lower temporal resolution are zero or correlated to the variations of the strain, or the parameter that affects the strain.

6. A method according to any one of claims 1-5, comprising

- performing said sweeping of the wavelength of the first and second light source simultaneously;
- splitting light reflected from the optical fiber with a wavelength selective splitter;
- performing said detecting of time points of the first and second peaks and said counting of the periods of the interferometer using the splitted light.

7. A method according to any one of the preceding claims, wherein the sweeps of the first and second light source lie in the optical O band and C band range respectively.

8. A fiber optic sensor system, comprising

- an optical fiber with a fiber part where spatial variations of an optical property of the fiber comprise periodic spatial variations with mutually different first and second spatial frequencies;
- a first and second wavelength sweepable light source, sweepable over a first and second wavelength range that contain first and second Bragg reflection wavelengths corresponding to first and second spatial frequencies respectively;

- a reference branch comprising at least one interferometer and a first and second filter having at least one discrete transmission or reflection peak or through in the first and second wavelength range respectively;
- an optical coupler arrangement, coupled between outputs of the first and second sweepable light source and inputs of the optical fiber and the reference branch, for supplying light from the first and second sweepable light source both to the optical fiber and the reference branch;
- a detector arrangement coupled to outputs of the optical fiber and the reference branch, configured to detect time points of first and second peaks in the reflection of the light from the first and second light source by the optical fiber during sweeping respectively, and to detect counts of periods in an output signal output of the interferometer or interferometers between the time points of detection of the first and second peaks and time points of detection of further peaks or throughs in the intensity of the light from the first and second light source transmitted through or reflected from the first and second filter respectively;
- a data processing system configured to determine wavelength differences of the first and second peak with respect to the wavelengths of the reflection peaks or throughs of the first and second filter using said count, and determine a variation of the strain, or the parameter that affects the strain, from the wavelength differences as a solution of an equation with coefficients relating the variations of the temperature and the strain of the fiber part to variation of the Bragg reflection wavelengths of the optical fiber.

9. A fiber optic sensor system according to claim 8, wherein the first and second light source are sweepable lasers.

10. A fiber optic sensor system according to claim 8 or 9, wherein the at least one interferometer, the first filter and the second filter are coupled optically in series with one another.

11. A fiber optic sensor system according to claim 8 or 9, comprising the reference branch comprises

- a wavelength selective splitter having an input and first and second outputs, the at least one interferometer being coupled between the optical coupler arrangement and the input of the splitter,

the detector arrangement comprising

- a first detector, the first filter being coupled between the first output of the splitter and the first detector;
- a second detector, the second filter being coupled between the second output of the splitter and the second detector.

12. A fiber optic sensor system according to claim 11, wherein the data processing system is configured to cause the first and second light source to perform said sweeping of the wavelength of the first and second light source simultaneously.

13. A fiber optic sensor system according to any one of claims 8-11, wherein the data processing system is configured to cause the first and second light source to sweep during different time intervals, to obtain detections of the time points of first and second peaks and the further peaks or throughs in response to the light from the first and second light source in the first and second time intervals respectively and to determine wavelengths of the first and second peak by means of counting periods of the interferometer in the first and second time intervals respectively.

14. A fiber optic sensor system according to any one of claims 8 to 13, comprising an optical circulator having an input, a combined input-output and an output, the input of the circulator being coupled to the optical coupler arrangement, the combined input-output of the circulator being coupled to the optical fiber, the detector arrangement comprising a detector coupled to the output of the circulator.

15. A fiber optic sensor system according to any one of claims 8-14, wherein the data processing system is configured to determine combined solutions of temporal variations of the strain, or the parameter that affects the strain, and temporal variations of the temperature from the wavelength differences, the variations of the temperature being determined at a relatively lower temporal resolution, the variations of the strain, or the parameter that affects the strain, being determined at a relatively higher temporal resolution, with a constraint that the variations of the temperature at that higher temporal frequency than associated with said relatively lower temporal resolution are zero or correlated to the variations of the strain, or the parameter that affects the strain.

# Fig.1 (Prior Art)

# Fig.2

Fig. 3

Fig.5

Fig.4

| | Europäisches Patentamt European Patent Office Office européen des brevets | **EUROPEAN SEARCH REPORT** | Application Number EP 13 15 3537 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | XU M G ET AL: "Discrimination between strain and temperature effects using dual-wavelength fibre grating sensors", ELECTRONICS LETTERS, IEE STEVENAGE, GB, vol. 30, no. 13, 23 June 1994 (1994-06-23), pages 1085-1087, XP006000740, ISSN: 0013-5194, DOI: 10.1049/EL:19940746 * the whole document * | 1-15 | INV. G01L1/24 G01B11/16 |
| Y | US 6 278 810 B1 (SIRKIS JAMES S [US] ET AL) 21 August 2001 (2001-08-21) * column 1, line 23 - line 60 * * column 10, line 19 - line 53 * * figures 2,8 * | 1-15 | |
| Y,D | WO 2012/087136 A1 (TNO [NL]; HARMSMA PETER JOHAN [NL]; YOUSEFI MIRVAIS [NL]) 28 June 2012 (2012-06-28) * the whole document * | 1-15 | |
| A | US 2005/094151 A1 (PANG GI S [KR] ET AL PANG GI SUNG [KR] ET AL) 5 May 2005 (2005-05-05) * paragraph [0041] * * paragraph [0050] - paragraph [0063] * * figures 4,5 * | 1-15 | TECHNICAL FIELDS SEARCHED (IPC) G01L G01B |

The present search report has been drawn up for all claims

| Place of search | Date of completion of the search | Examiner |
|---|---|---|
| The Hague | 5 July 2013 | Reto, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 15 3537

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2013

| Patent document cited in search report | | Publication date | Patent family member(s) | | Publication date |
|---|---|---|---|---|---|
| US 6278810 | B1 | 21-08-2001 | NONE | | |
| WO 2012087136 | A1 | 28-06-2012 | EP WO | 2469255 A1 2012087136 A1 | 27-06-2012 28-06-2012 |
| US 2005094151 | A1 | 05-05-2005 | NONE | | |

EPO FORM P0459

For more details about this annex : see Official Journal of the European Patent Office, No. 12/82

**EP 2 762 847 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2012087136 A

### Non-patent literature cited in the description

- **XU et al.** Discrimination between strain and temperature effects using dual-wavelength fiber grating sensors. *Electronic Letters,* 1994, vol. 30, 1085-1087